# EUROPEAN PATENT APPLICATION

(11) **EP 3 279 273 A1**
(43) Date of publication of application: **07.02.2018**
(21) Application number: 17185002.7
(22) Date of filing: 04.08.2017
(51) Int. Cl.: C09D 5/16, C04B 41/46, C04B 41/49, C04B 41/62, C04B 41/64, C09D 183/04

(54) **A COMPOSITION, USE OF THE COMPOSITION, AN IMPREGNANT AND A METHOD FOR THE PREPARING THE COMPOSITION**

(30) Priority: 05.08.2016 PL 41823616
(71) Applicant: Malgorzata Brzezinska-Kisiel P.P.H. "ALCHEM", 46-060 Prószków (PL)
(72) Inventor: Brzezinska-Kisiel, Malgorzata, 45-269 Opole (PL)
(74) Representative: Walkiewicz, Sebastian Rafal

(57) **Abstract**

The invention relates to a composition having impregnating properties, which is intended to protect various products, especially construction and decorative products, located inside and outside of the buildings. The invention relates also to the use of such a composition, impregnant comprising the same and a method for preparing such a composition.

## Description

The invention relates to a composition having impregnating properties, which is intended to protect various products, especially construction and decorative products, located inside and outside of the buildings. The invention relates also to the use of such composition, an impregnant comprising the same and a method for its preparation.

Various compositions, which are used for providing interior elements made of various materials, for example to walls, especially previously covered with paint coatings with a variety of decorative effects, such as shine, metallic sparkle effect, etc., are known in the art. Usually, such compositions are prepared on the basis of acrylic compounds, styrene compounds or their mixtures.

One of such products is the composition sold under the tradename Alpina Lasur Effekt. The composition comprises, among others: water dispersion of acrylic resin, mineral fillers, pigments, preservatives and titanium white. This composition is intended to be used only inside of the buildings and gives walls an effect of pearl-metallic shine, for example silver or golden.

Another product of this type is a decorative, acrylic-based lacquer, which comprises glitter, sold by Ponteck sp. z o.o. company under the tradename Brillantes Finition. This product is also intended to be used only inside of the buildings, on the walls previously covered with a satin or latex paint, providing them with a sparking-surface effect.

Combination of a decorative pigment (Dekoral Fashion Diamentowa Kolekcja) with a colorless acrylic lacquer (Dekoral Fashion) sold by PPG Deco Polska Sp. z o.o. company shows similar properties. Said composition is also intended to be used only inside of the buildings.

All of the above discussed products are intended to be used only inside of the buildings and the effect provided by them is purely decorative.

Therefore, there is a need for a composition, which would be suitable for use not only inside of the buildings, but also on the exterior surfaces, for example on facades of buildings, providing such technical effects as weather resistance or dirt resistance, as well as a durable and attractive decorative effect.

Unexpectedly it turned out that the composition of the invention fulfils abovementioned needs, as well as provides a number of additional advantages.

### Subject of the invention

The subject of the invention is a composition characterized in that it comprises

| | |
|---|---|
| 0.050 - 0.31 % by weight | of rheological agent, |
| 6.00 - 20.00 % by weight | of aqueous silicon emulsion |
| 1.00 - 3.00 % by weight | of binding agent |
| 0.06 - 0.6 % by weight | of agent providing a decorative effect |
| 0.02 - 0.15 % by weight | of anti-foaming agent |
| 0.03 - 0.1 % by weight | of biocide |
| 79.00-89.8 % by weight | of demineralised water |

Composition according to claim 1, characterized by that it comprises

| | |
|---|---|
| 0.30 % by weight | of rheological agent, |
| 10.00 % by weight | of aqueous silicon emulsion |
| 1.00 % by weight | of binding agent |
| 0.15 % by weight | of agent providing a decorative effect |
| 0.05 % by weight | of anti-foaming agent |
| 0.04 % by weight | of biocide |
| 88.46 % by weight | of demineralised water |

Preferably, composition comprises as a binding agent an acrylic-styrene dispersion, or acrylic emulsion or dispersion, particularly preferably an acrylic-styrene dispersion.

Preferably, composition comprises as an agent providing a decorative effect a pigment or a glitter, particularly preferably a pigment,.

Preferably, pigment comprises particles having average sizes of 5-25 µm, 10-60 µm, 100-1000 µm or 50-700 µm.

Preferably, pigment is present in the form of a paste comprising

| | |
|---|---|
| 69.50 % by weight | of demineralised water, |
| 0.50 % by weight | of rheological agent, |
| 30.00 % by weight | of pearl pigment. |

The subject of the invention is also use of the composition defined above as an impregnant.

Preferably, impregnant is intended to protect the construction and/or decorative products.

Preferably, construction and/or decorative products are prepared from materials selected from a group comprising concrete, gypsum, wood, natural stone, plasters, clinker and combinations thereof, also covered with a paint, and construction and/or decorative products are especially selected from a group comprising concrete tiles, gypsum tiles, decorative and facade stone, decorations made of gypsum or concrete, wooden products, gypsum products, concrete products, plasters, especially gypsum plasters and products made of clinker.

The subject of the invention is also an impregnant comprising the composition as defined above.

The subject of the invention is also a method for preparing the composition as defined above, in which:
a) a vessel is filled with a portion of water and the rheological agent is added, wherein subsequently those components are mixed together,
b) during agitation the vessel is being filled with the remaining portion of water, the aqueous silicon emulsion, the binding agent, the agent providing a decorative effect, the anti-foaming agent and the biocide, and subsequently obtained mixture is agitated.

Preferably, the portion of water used in step a) represents about 20% by weight of the total water used in the process.

Preferably, the rheological agent in step a) is used in the amount of 2% by weight in relation to the amount of used water.

Preferably, in step a) components are at first agitated at low speed, and then at high speed, wherein before step b) agitator is again set to slow rotation, wherein in step a) agitating at low speed is performed for about 5 minutes and at high speed for about 20 minutes.

Preferably, in step b) particular components are added sequentially at intervals, preferably about every 5 minutes.

### Advantages of the invention

The studies conducted by the Applicant has shown that thanks to the unexpectedly obtained weather resistance provided by the forming barrier coating against water, the composition defined above (further defined as the composition of the invention) provides possibility to use it not only inside of a building, but also on the surfaces of the buildings and products which are located outside. Moreover, composition of the invention provides coatings, which are durable and resistant to dirt. Thanks to those advantages, composition of the invention shows ideal impregnating properties. Additionally, composition of the invention provides attractive decorative effects (e.g. imitation of the appearance of a natural stone).

Unexpected technical effects discussed above are a result of the particular combination of components in the composition of the invention.

### Detailed description of the invention

The subject of the invention is a composition having impregnating properties, which might be applicable in various technical fields, for example in construction industry as a component of an impregnant for various construction and/or decorative materials.

Materials, to which the composition of the invention might be applicable, include all of the materials used in the construction industry for preparing construction and/or decorative elements, in particular concrete, gypsum, wood, natural stones, plasters, clinker and combinations thereof, also covered with a paint.

Said construction and/or decorative products, to which the composition of the invention might be used are especially selected from a group comprising concrete tiles, gypsum tiles, decorative and facade stone, decorations made of gypsum or concrete, wooden, gypsum products, concrete products, plasters, especially gypsum plasters and products made of clinker.

Composition of the invention can constitute about 100% of the impregnant, but it can also be included in a smaller amount, for example it can represent from about 1 to about 99% by weight, especially about 95 % by weight, about 90 % by weight, about 85 % by weight, about 80 % by weight, about 75 % by weight, about 70 % by weight, about 65 % by weight, about 60 % by weight, about 55 % by weight, about 50 % by weight, about 45 % by weight, about 40 % by weight, about 35 % by weight, about 30 % by weight, about 25 % by weight, about 20 % by weight, about 15 % by weight, about 10 % by weight, about 5 % by weight, based on the total weight of the impregnant.

Impregnant, in which the composition is used, can be of any final form used in the art, for example it can be in the form of a solution, emulsion, suspension, concentrate, gel, sol, etc.

Such an impregnant can be applied by any approach known in the art, for example by painting (with a brush, roller etc.) or by spraying.

Aqueous silicon emulsion included in the composition of the invention acts as an agent for providing the composition with hydrophobic properties. This component is comprised in the composition of the invention in an amount from about 6.00 to about 20.00 % by weight, preferably in an amount of about 10.00 % by weight, based on the total weight of the composition. According to the invention any aqueous silicon emulsion known and used in the art of the invention can be used. The exemplary, preferred aqueous silicon emulsions, which can be used in the composition of the invention are: aqueous silicon emulsion with a small admixture of a solvent (e.g. product sold under tradename SARSIL® ME-25), solvent-free aqueous emulsion of functionalised polysiloxanes (e.g. product sold under tradename NEVOSIL®310), water-dilutable, solvent-free emulsion based on a mixture of silane and siloxane (e.g. product sold under tradename Wacker Silres® BS1001) or aqueous emulsion based on a polysiloxane functionalised by amino groups (e.g. product sold under tradename VARIPHOB HP 150).

Composition of the invention also comprises an agent providing a decorative effect.

The agent providing a decorative effect can be included in the composition of the invention in an amount from about 0.06 to about 0.6 % by weight, preferably in an amount of 0.15 % by weight, based on the total weight of the composition.

Preferably, such an agent can be a pigment or a glitter. Most preferably such an agent is a pigment.

According to the invention any pigment known and used in the art of the invention can be used, for example a pigment in the form of a powder or a paste. Pigment can comprise particles of various average sizes, and therefore it will provide various technical and/or decorative effects, for example by providing the surface coated by the composition of the invention with look similar to surface of a natural stone. For example, average size of particles included in the pigment is in the range of 5-25 µm, 50-700 µm, 10-60 µm or 100-1000 µm

Preferably, pigment is a pearl pigment used for example in the form of a paste.

Particularly advantagous effects were obtained, when a pigment paste of the following composition was used:

| | |
|---|---|
| 69.50 % by weight | of demineralised water, |
| 0.50 % by weight | of rheological agent (np. BYK-420), |
| 30.00 % by weight | of pearl pigment. |

In case of using the abovementioned pigment paste, it is used in an amount from about 0.20 to about 2.00 % by weight, preferably in an amount of about 0.50 % by weight, based on the total weight of the composition.

The exemplary, preferred pigments, which can be used in the composition of the invention, both in a powdered form or as a component of the abovementioned paste, are, amongst other, pigments offered by Fujian Kuncai Material Technology Co., Ltd. e.g. marked by symbols: KC 103 (average particle size 10-60 µm), KC 201 (average particle size 5-25 µm), KC 193 (average particle size 50-700 µm) or KC 9000H or KC 9006H (average particle size 100-1000 µm).

Composition of the invention also comprises a rheological agent, which provides it with suitable thixotropic properties, facilitating the use of the composition on the treated surfaces. Rheological agent is used in the composition of the invention in an amount form about 0.05 to about 0.3 % by weight, preferably in an amount of about 0.3 % by weight, based on the total weight of the composition, wherein if the amount of the rheological agent present in the pearl pigment paste is taken into account, the total content of this component will be in the range of 0.05 - 0.31 % by weight based on the total weight of the composition. According to the invention, any rheological agent known and used in the art of the invention can be used. The exemplary, preferred rheological agents, which can be used in the composition of the invention are: modified urea solutions (e.g. product sold under tradename BYK-420) or silicate-based agents (e.g. product sold under tradename LAPONITE RD).

The composition of the invention also comprises a binding agent providing binding of pigment particles of the composition of the invention on the surface of the applied coating. The binding agent is present in an amount form about 1.00 to about 3.00 % by weight, preferably in an amount of about 1.00 % by weight, based on the total weight of the composition. According to the invention, any acrylic-styrene dispersion or acrylic emulsion or dispersion, known and used in the art of the invention can be used as a binding agent. The exemplary, preferred binding agents, which can be used in the composition of the invention are: aqueous dispersions based on styrene-acrylic copolymers (e.g. product sold under tradename OSAKRYL® OSA 1 M), emulsions based on acrylic polymers (e.g. products sold under trade names UCAR™ Latex DL 420 G or FINNDISP™ AGP 04) or aqueous dispersions of acrylic copolymers (e.g. product sold under tradename OSAKRYL® AP40).

Composition of the invention also comprises an antifoaming agent present in an amount from about 0.02 to about 0.15 % by weight, preferably in an amount of about 0.05 % by weight, based on the total weight of the composition. According to the invention, any antifoaming agent known and used in the art of the invention can be used. The exemplary, preferred antifoaming agents, which can be used in the composition of the invention are: agents based on polysiloxanes (e.g. product sold under tradename BYK-1610) or a product sold under tradename Nopcomaster DF150.

The composition of the invention also comprises a biocide providing the protection of surfaces treated with the composition of the invention against harmful microorganisms. Any agent of that type, known and used in the art of the invention, both of natural and artificial origin, can be a biocide. The exemplary, preferred biocides, which can be used in the composition of the invention are: agents comprising 1,2-benzisothiazolin-3-one, methylisothiazolin-3-one (e.g. product sold under tradename PREVENTOL BM5) or agents comprising methylisothiazolone and bronopol (e.g. product sold under tradename ROCIMA™ 552). Biocide is present in an amount from about 0.03 to about 0.1 % by weight, preferably in an amount of about 0.04 % by weight, based on the total weight of the composition.

Water can be present in an amount from about 79.00 to about 88.41 % by weight, preferably in an amount of about 88.11 % by weight, based on the total weight of the composition, wherein if the amount of the water present in the pearl pigment paste is taken into account, the total content of this component will be in the range of 79.00 - 89.80 % by weight, and preferably will represent 88.46 % by weight based on the total weight of the composition.

In addition to the components listed above, impregnant comprising the composition of the invention can comprise any components, used in the art for providing it with additional, preferable properties.

According to the invention, the term "about" is to be understood as a +/- 5% deviation from a given value, representing inaccuracies which can appear in the course of conducting the process of preparing the composition of the invention.

Composition of the invention can be prepared by any method known to the person skilled in the art of the invention. However, a particularly preferable composition of the invention can be obtained by a method comprising the following steps:
a) placing a portion of water and a rheological agent in a vessel and mixing these components together,
b) adding to the vessel, while agitating, the remaining portion of the water, aqueous silicon emulsion, binding agent, agent providing a decorative effect, anti-foaming agent and biocide, and agitating the resulting mixture.

According to one embodiment of the invention, the portion of water used in step a) represents about 20% by weight of the total water used in the method of preparation.

According to one embodiment of the invention, the rheological agent in step a) is used in an amount of 2% by weight based on amount of used water.

In another embodiment, in step a) components are at first agitated at low speed, and then at high speed, wherein before step b) agitator mixer is again set to slow rotation. Agitation at low speed, while dosing the rheological agent, allows for its good distribution in water, which is important, especially in case of using a pigment of high diameter of particles. High speed agitation allows rheological agent to bind with water, which results in obtaining a gel. According to the invention, the velocity of low speed agitation is in the range from 1.5 to 2 m/s, and the velocity of high speed agitation is in the range from 4.5 to 7.0 m/s.

According to an embodiment of the invention, in step a) a low speed agitation is being performed for about 5 minutes, and high speed agitation for about 20 minutes.

In another embodiment, in step b) individual components are added sequentially at intervals, preferably about every 5 minutes. Such a procedure provides a thorough agitation of individual components.

According to an embodiment of the invention, to provide a thorough agitation of the whole mixture after addition of all of its components in step b) it is additionally agitated for another 10 minutes.

Abovementioned embodiments of the method of the invention can be used separately and jointly.

### Examples

### Example 1 Composition of the invention

A tub was filled with demineralized water (333.4 g), the mixer was switched on (2 m/s), then the rheological agent (BYK-420, 6.67 g) was added and agitated for 5 minutes. After a predetermined time has elapsed, mixer was set to higher rotational speed (7 m/s) and agitation continued for another 20 minutes. Further, the rotational speed was set to a lower value (2 m/s) and the rest of the components was added in the following order: demineralized water (1428.80 g), biocide (Preventol® BM5, 80.00 g), aqueous silicon emulsion (Sarsil®ME 25, 200.00 g), acrylic-styrene dispersion (Osakryl® OSA 1 M, 20.00 g, binding agent); pearl pigment paste (based on KC 103 pigment, 10.00 g, agent providing a decorative effect) and anti-foaming agent (BYK-1610, 1.00 g), maintaining a five-minute intervals between addition of components. After the addition has been completed, the whole was agitated for additional 10 minutes.

The method was performed at an ambient temperature (20°C)

In this example a pearl pigment paste, containing 69.50 % by weight of demineralised water, 0.50 % by weight of rheological agent (BYK-420), and 30.00 % by weight of pearl pigment of average particle size in the range of 10-60 µm (based on KC 103 pigment), was used.

The impregnating composition was obtained in the form of a solution comprising:

| | |
|---|---|
| 0.30 % by weight | of rheological agent (BYK 420), |
| 10.00 % by weight | of aqueous silicon emulsion (Sarsil® ME 25) |
| 1.00 % by weight | of acrylic-styrene dispersion (Osakryl OSA 1M) |
| 0.5 % by weight | of pearl pigment paste (based on KC 103 pigment) |
| 0.05 % by weight | of anti-foaming agent (BYK-1610) |
| 0.04 % by weight | of biocide (Preventol® BM5) |
| 88.11 % by weight | of demineralised water |

The composition obtained using the above method was tested with the use of white, sand and grey concrete and gypsum tiles of . Compositions were applied to the surface of the tiles by spraying at an ambient temperature (20°C).

The resulting coatings form a durable, invisible, hydrophobic barrier layer, providing tiles with resistance to atmospheric conditions, rainfall, etc. Moreover, it was observed, that in comparison to tiles, which were not treated with the resulting composition of the invention (comparative group), tiles from Example 1 show an increased resistance to dirt.

After the mixture has been bound to the surface of tiles, the natural gloss imitating the effect of a shiny, fine mica existing in natural rocks and stones, was observed. Depending on the colour of a substrate, the observed effect of the gloss is more or less intensive. The effect on white tile is gentle, but it sharpens and highlights the whiteness, while on a grey tile the intensity is very high.

### Example 2. Composition of the invention

The method described in Example 1 was used to prepare the composition of the invention, in which a pigment paste of an average particle size in the range of 100-1000 µm was used (based on KC 9000H pigment).

The composition obtained using the above method was tested according to the method described in Example 1.

Similarly to Example 1 resulting coatings form a durable, invisible, hydrophobic barrier layer, providing the tiles with a resistance to atmospheric conditions, rainfall, etc. Moreover, it was observed, that in comparison to tiles, which were not treated with the resulting composition of the invention (comparative group), tiles from Example 2 show an increased resistance to dirt.

After the mixture has been bound to the surface of the tiles, the effect of crystals embedded in rock and shiny, thick mica was observed, imitating the appearance of natural rocks. The particles providing this effect were crystal-like or golden.

### Example 3. Composition of the invention

The method described in Example 1 was used to prepare the composition of the invention, in which a pigment paste of an average particle size in the range of 5-25 µm was used (based on KC 201 pigment).

The composition obtained using the above method was tested according to the method described in Example 1.

Similarly to Example 1 resulting coatings form a durable, invisible, hydrophobic barrier layer, providing the tiles with resistance to atmospheric conditions, rainfall, etc. Moreover, it was observed, that in comparison to tiles, which were not treated with the resulting composition of the invention (comparative group), tiles from Example 3 show an increased resistance to dirt.

After the mixture has been bound to the surface of the tiles, the effect of pearly satin was observed on the surfaces of white and sand tiles of , while at the surface of a grey tile the effect of a satin old gold was formed.

## Claims

1. Composition **characterized in that** it comprises
| | |
|---|---|
| 0.050 - 0.31 % by weight | of rheological agent, |
| 6.00 - 20.00 % by weight | of aqueous silicon emulsion |
| 1.00 - 3.00 % by weight | of binding agent |
| 0.06 - 0.6 % by weight | of agent providing a decorative effect |
| 0.02 - 0.15 % by weight | of anti-foaming agent |
| 0.03 - 0.1 % by weight | of biocide |
| 79.00-89.8 % by weight | of demineralised water |

2. Composition according to claim 1, **characterized in that** it comprises
| | |
|---|---|
| 0.30 % by weight | of rheological agent, |
| 10.00 % by weight | of aqueous silicon emulsion |
| 1.00 % by weight | of binding agent |
| 0.15 % by weight | of agent providing a decorative effect |
| 0.05 % by weight | of anti-foaming agent |
| 0.04 % by weight | of biocide |
| 88.46 % by weight | of demineralised water |

3. Composition according to claim 1 or 2 **characterized in that** as the binding agent it comprises an acrylic-styrene dispersion, relatively an acrylic emulsion or dispersion.

4. Composition according to any of the claims 1-3 **characterized in that** as the agent providing a decorative effect it comprises a pigment or a glitter.

5. Composition according to claim 4, **characterized in that** the pigment comprises particles having average sizes of 5-25 µm, 10-60 µm, 100-1000 µm or 50-700 µm.

6. Composition according to any of the claims 1-5, **characterized in that** the pigment is present in the form of a paste comprising
| | |
|---|---|
| 69.50 % by weight | of demineralised water. |
| 0.50 % by weight | of rheological agent. |
| 30.00 % by weight | of pearl pigment. |

7. A use of the composition according to any of the claims 1-6 as an impregnant.

8. The use according to claim 7, **characterized in that** the impregnant is intended to protect the construction and/or decorative products.

9. The use according to claim 8, **characterized in that** the construction and/or decorative products are prepared from a material selected from a group comprising concrete, gypsum, wood, natural stone, plasters, clinker and combinations thereof, also covered with a paint, and are especially selected from a group comprising concrete tiles, gypsum tiles, decorative and facade stone, decorations made of gypsum or concrete, wooden products, gypsum products, concrete products, plasters, especially gypsum plasters and products made of clinker.

10. Impregnant **characterized in that** it comprises the composition as defined in any of the claims 1-6.

11. A method for preparing the composition as defined in any of the claims 1-6 **characterized in that**
a) a vessel is filled with a portion of water and the rheological agent is added, and subsequently those components are mixed together,
b) during agitation the remaining portion of water, the aqueous silicon emulsion, the binding agent, the agent providing a decorative effect, the anti-foaming agent and the biocide are added to the vessel, and subsequently obtained mixture is agitated.

12. The method according to claim 11, **characterized in that** the portion of water used in step a) represents about 20% by weight of the total water used in the process.

13. The method according to claim 11 or 12, **characterized in that** the rheological agent in step a) is used in the amount of 2% by weight in relation to the amount of used water.

14. The method according to any of the claims 11 - 13, **characterized in that** in step a) components are at first agitated at low speed and then at high speed, wherein before step b) agitator is again set to slow rotation, wherein in step a) agitating at low speed is performed for about 5 minutes and at high speed for about 20 minutes.

15. The method according to any of the claims 11 - 14, **characterized in that** in step b) particular components are added sequentially at intervals, preferably about every 5 minutes.
